# FASCICULE DE BREVET EUROPEEN

(11) **EP 3 701 176 B1**
(45) Date de publication et mention de la délivrance du brevet: **19.04.2023**
(21) Numéro de dépôt: 18833449.4
(22) Date de dépôt: 03.12.2018
(51) Int. Cl.: F16K 17/04

(54) **CLAPET DE CIRCUIT HYDRAULIQUE A PERTE DE CHARGE CONSTANTE**
VENTIL EINES HYDRAULIKKREISES MIT KONSTANTEM DRUCKABFALL
VALE OF A HYDRAULIC CIRCUIT WITH CONSTANT PRESSURE DROP

(30) Priorité: 05.12.2017 FR 1761637
(43) Date de publication de la demande: 02.09.2020
(73) Titulaire: Safran Aircraft Engines, 75015 Paris (FR)
(72) Inventeur: GUILLOU, Lancelot, 77550 Moissy-Cramayel (FR); AUBERGER, Stéphane, Louis, Lucien, 77550 Moissy-Cramayel (FR)
(74) Mandataire: Brevalex
(86) Numéro de dépôt international: PCT/FR2018/053080
(87) Numéro de publication internationale: WO 2019/110901

(56) Documents cités:
- WO-A1-2012/169425
- CN-A- 106 402 435
- DE-A1- 2 130 162
- DE-B- 1 228 880
- GB-A- 532 599
- US-A- 2 917 072
- US-A- 2 941 629
- US-A- 3 572 372
- US-A- 3 651 827
- US-A- 4 616 672
- US-A- 5 533 548

## Description

### DOMAINE TECHNIQUE

L'invention concerne un clapet de pression destiné par exemple à protéger un circuit en cas de surpression, ou à permettre le passage d'un débit hydraulique en cas de colmatage d'une branche principale d'un circuit, ou encore à contrôler un débit dans une branche dite de bypass.

### ÉTAT DE LA TECHNIQUE ANTÉRIEURE

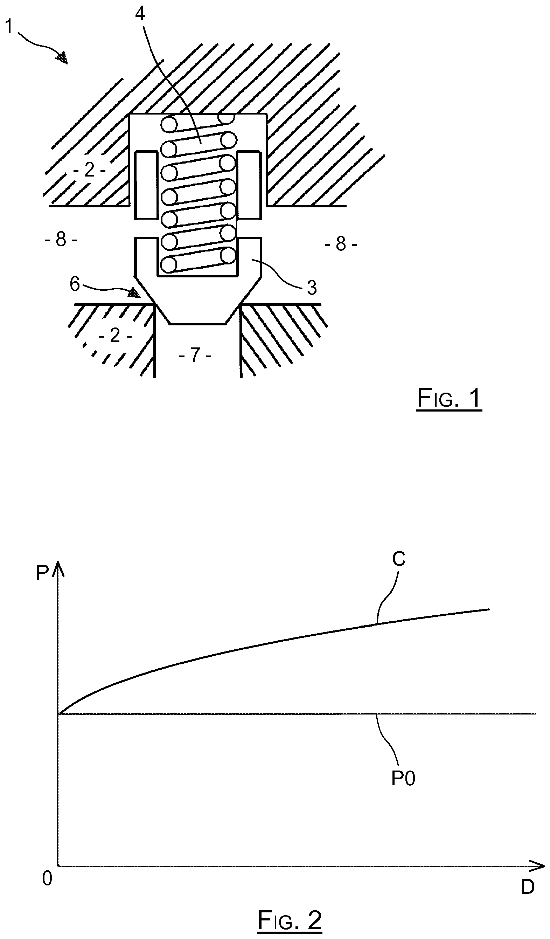

Comme représenté schématiquement sur la figure 1, un tel clapet de pression 1 comporte typiquement un corps 2 dans lequel coulisse une soupape 3, avec un ressort 4 tendant à presser la soupape 3 vers un siège 6 d'une ouverture d'admission 7 du corps. Dans un tel agencement, le diamètre du siège 6, la précontrainte et la raideur du ressort 4 conditionnent conjointement une valeur de seuil de différence de pression entre l'admission 7 et le refoulement 8 que l'on appelle pression différentielle d'ouverture. Au-delà de cette pression différentielle d'ouverture, le clapet 1 s'ouvre, la soupape 3 s'écartant alors du siège 6 pour laisser passer un débit hydraulique dans le corps 2, depuis l'ouverture d'admission 7, vers une ou plusieurs ouvertures de refoulement 8.

US3651827 divulgue le préambule de la revendication 1.

Dans un tel agencement, le déplacement de la soupape est d'autant plus petit que la raideur du ressort est élevée pour un même diamètre de siège, et ce déplacement conditionne la section de passage du fluide. Ce déplacement dépend de l'écart de pression de part et d'autre du clapet. En pratique, le déplacement, et par là même la section de passage du clapet augmente très faiblement pas avec le débit traversant le clapet.

Ainsi, dans un tel clapet, comme représenté sur la figure 2, l'accroissement du débit noté D induit un accroissement important des pertes de charge, conformément à la courbe repérée par C.

En pratique, on attend d'un tel clapet qu'il offre une perte de charge qui soit sensiblement constante, c'est-à-dire qui n'augmente pas lorsque le débit augmente. Le but de l'invention est d'apporter un agencement de clapet introduisant une perte de charge sensiblement constante.

### EXPOSÉ DE L'INVENTION

A cet effet, l'invention a pour objet un clapet de pression comprenant un corps incluant au moins une ouverture de refoulement et une ouverture d'admission pourvue d'un siège, un fluide étant apte à traverser d'amont en aval depuis l'ouverture d'admission vers au moins une ouverture de refoulement, une soupape coulissant dans un logement de ce corps en vis-à-vis du siège, cette soupape comportant une jupe cylindrique fermée par une tête pour délimiter avec ce logement une chambre, un élément des sollicitation tendant à rapprocher un flanc de la tête de soupape d'une face du siège, une lèvre d'étanchéité par laquelle le flanc de la tête et la face du siège sont maintenus à distance lorsque la tête est en appui sur le siège sous l'action de l'élément de sollicitation, la tête comportant au moins un trou traversant son flanc pour mettre en communication la chambre avec au moins l'ouverture de refoulement, chaque trou débouchant dans un espace communiquant avec chaque ouverture de refoulement, en étant situé en vis-à-vis de la face du siège et en aval de la lèvre par rapport à l'ouverture d'admission, cet espace annulaire délimitant avec la lèvre un évasement formant divergeant pour le fluide traversant le clapet afin d'abaisser la pression dans la chambre par effet Venturi lorsque la soupape est ouverte, le flanc de la tête de soupape et la face du siège portant la lèvre étant en outre coniques.

Avec cet agencement, la chambre interne se dépressurise par effet Venturi pour accroître l'ouverture de la soupape lorsqu'un débit important traverse le clapet.

Non conforme à l'invention, la lèvre d'un clapet peut être portée par le flanc de la tête. Un clapet peut également comprendre une ouverture d'admission et deux ouvertures de refoulement agencées selon une disposition correspondant à la lettre T.

Non conforme à l'invention, la tête de soupape comporte un flanc conique ou sphérique, et dans laquelle le siège peut comporter une face sphérique portant une lèvre.

Non conforme à l'invention, la tête de soupape peut comporter un flanc sphérique, et dans laquelle le siège comporte une face sphérique portant une lèvre.

Non conforme à l'invention, la tête de soupape peut comporter un flanc sphérique, et dans laquelle le siège comporte une face conique portant une lèvre.

### BRÈVE DESCRIPTION DES DESSINS

La figure 1 est une vue en coupe d'un clapet connu de l'Etat de la technique ;
La figure 2 est un graphe représentatif de l'augmentation de la perte de charge C avec l'accroissement du débit D et de la pression P avec le clapet connu de l'Etat de la technique, à partir d'une pression seuil d'ouverture P0 ;
La figure 3 est une vue en coupe d'un clapet selon l'invention ;
La figure 4 est une vue en coupe de détail de l'écoulement du fluide au voisinage du siège dans le clapet selon l'invention ;
La figure 5 est un graphe montrant la très faible variation de la perte de charge C avec l'accroissement du débit D et de la pression P avec le clapet selon l'invention à partir d'une pression seuil d'ouverture P0.

### EXPOSÉ DÉTAILLÉ DE MODES DE RÉALISATION PARTICULIERS

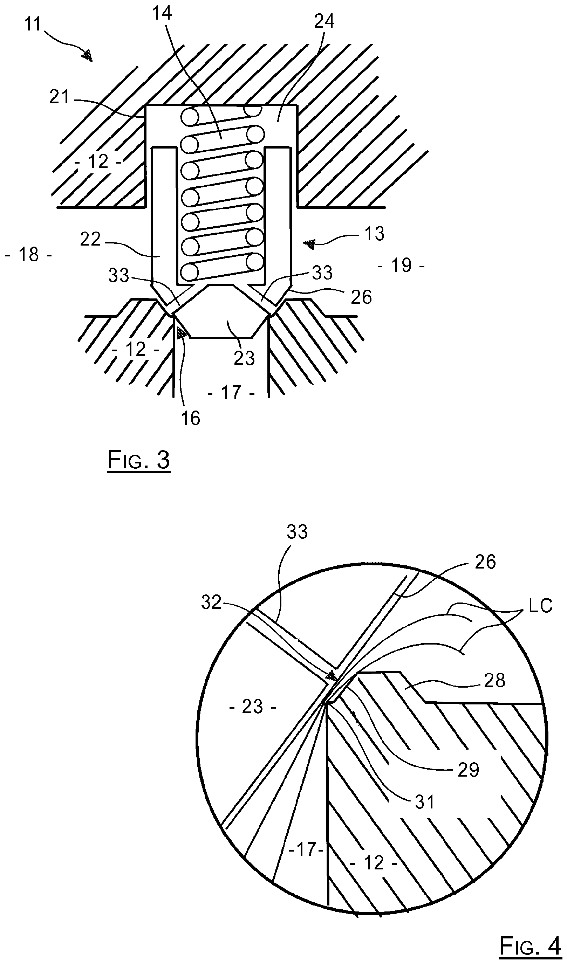

Sur la figure 3, le clapet de pression selon l'invention qui est repéré par 11 comporte un corps 12 dans lequel est montée une soupape coulissante 13 avec un système de rappel en position (ou encore élément de sollicitation) tel qu'un ressort 14 tendant à presser cette soupape contre un siège 16 d'une ouverture d'admission 17 de ce corps 12 (qui peut être réalisé avec plusieurs pièces) qui comporte également une ou plusieurs ouvertures de refoulement 18 et 19. La ou les ouvertures de refoulement peuvent être librement localisées derrière le siège.

La soupape 13 est située en vis-à-vis du siège 16 de l'ouverture d'admission 17, ce siège 16 délimitant ainsi à l'embouchure interne de cette ouverture 17. La soupape 13 est montée dans un logement correspondant 21 du corps 12, situé en vis-à-vis du siège 16.

Cette soupape 13 a une forme générale de révolution, comprenant une jupe 22 cylindrique qui est ouverte du côté du logement 21 et qui est fermée par une tête de soupape 23 en vis-à-vis du siège 16.

Comme visible sur la figure 3, le logement 21 a une forme de trou borgne cylindrique ayant un diamètre interne correspondant au diamètre externe de la jupe 22, de sorte que la soupape 13 coulisse dans le logement cylindrique 21, en délimitant conjointement avec celui-ci une chambre interne 24 dont le volume diminue lorsque la soupape s'écarte du siège 16 et augmente lorsqu'elle est pressée contre ce siège 16 par le ressort 14.

La tête 23 de la soupape a une forme générale de cône ou de sphère pour constituer une surface de contact 26, encore appelée siège.

Comme visible plus clairement sur la figure 4 le siège 16 comporte un bord ou nervure circonférentiel 28 qui entoure l'ouverture 17 au niveau de son embouchure interne en dépassant vers la soupape. Ce bord 28 est délimité intérieurement par une face en couronne conique 29 située en vis-à-vis du flanc 26.

Complémentairement, le siège 16 comporte au niveau de sa base, c'est-à-dire dans la région par laquelle la couronne conique ou sphérique 29 se raccorde à la face interne cylindrique de l'ouverture d'admission 17 un rebord ou lèvre circonférentielle 31, qui dépasse de la couronne conique 29 en direction du flanc conique ou sphérique 26.

Lorsque la soupape 13 est fermée, son flanc conique ou sphérique 26 est en appui sur la lèvre 31 pour établir une étanchéité de fermeture, et une région annulaire 32 subsiste entre le flanc 26 et la couronne 29 qui s'étendent parallèlement l'un à l'autre tout en étant radialement à distance l'un de l'autre.

Complémentairement, la tête 23 de la soupape comporte un ou plusieurs trous débouchant 33 formés à travers la paroi délimitant le flanc 26 et qui débouchent dans la chambre 24 de la soupape 13 pour la mettre en communication avec la région annulaire 32, c'est-à-dire avec la ou les ouvertures de refoulement 18, 19.

Comme visible sur la figure 4, la lèvre 31 délimite avec l'espace annulaire 32 un évasement formant divergeant qui permet de générer un effet d'aspiration lorsqu'un débit traverse le clapet 11. Autrement dit, et comme illustré sur la figure 4, les lignes de courant LC s'écartent les unes des autres lorsqu'elles entrent dans l'espace annulaire 32 formant un divergeant.

Plus particulièrement, lorsque la pression dans l'ouverture d'admission 17 dépasse un seuil dépendant notamment de la raideur et de la précontrainte du ressort 14, la soupape 13 se rétracte dans le logement 21 en coulissant à l'encontre du ressort 14, de sorte que le flanc 26 s'écarte sensiblement de la lèvre 31, ce qui délimite une section de passage de fluide en forme de couronne conique ou sphérique.

Après avoir dépassé cette section de passage, le fluide atteint la région annulaire 32 qui offre une section de passage plus importante du fait que la face 29 est radialement en retrait par rapport à la lèvre 31. Du fait de cette augmentation de la section de passage, le fluide subit un effet Venturi de sorte que sa pression diminue, ce qui génère un effet d'aspiration par les trous 33 provoquant une diminution de la pression dans la chambre 24.

Les trous 33 constituent ainsi des trous de dépressurisation de la chambre 24 : la pression dans ces trous est inférieure à la pression de sortie grâce à l'effet de succion provoqué par l'effet Venturi résultant du passage du fluide dans la région annulaire divergente 32 en aval de la lèvre 31.

Comme visible sur la figure 3, la chambre 24 étant délimitée de manière sensiblement étanche par le logement 21 et la soupape 13, l'abaissement de la pression dans cette chambre 24 provoque un accroissement du retrait de la soupape, dont le flanc 26 s'écarte plus fortement de la lèvre de façon à augmenter la section de passage du fluide.

Grâce à ce fonctionnement, une augmentation du débit lorsque le clapet est ouvert tend à ouvrir plus fortement ce clapet pour accroître la section de passage. Plus concrètement, dans un premier temps, une augmentation de débit se traduit par une plus grande vitesse du fluide à travers la région annulaire 32, ce qui augmente l'effet Venturi, et par là-même la baisse de pression dans les trous 33 et dans la chambre 24. Cette diminution de la pression dans la chambre 24 provoque un retrait plus important de la soupape 13, c'est-à-dire une augmentation de la section de passage lorsque le débit augmente.

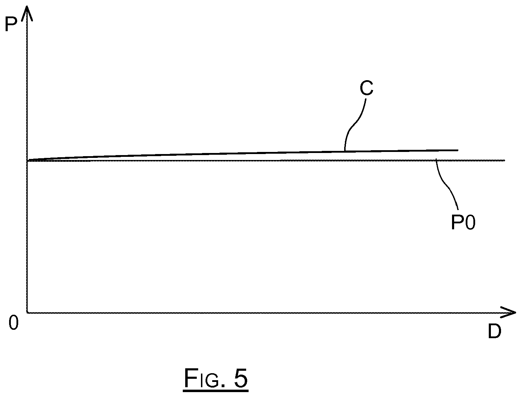

Ainsi, la perte de charge introduite par le clapet est sensiblement constante du fait que la section de passage offerte par ce clapet fluctue avec le débit. Dans ces conditions, il est possible de dimensionner le clapet pour obtenir une perte de charge C sensiblement constante par rapport au débit D traversant le clapet, comme illustré par la courbe C sur la figure 5, qui montre la faible évolution de la perte de charge notée P avec le débit.

## Revendications

1. Clapet de pression (11) comprenant un corps (12) incluant au moins une ouverture de refoulement (18, 19) et au moins une ouverture d'admission (17) pourvue d'un siège (16), un fluide étant apte à traverser d'amont en aval depuis l'ouverture d'admission (17) vers au moins une ouverture de refoulement (18, 19), une soupape (13) coulissant dans un logement (21) de ce corps (12) en vis-à-vis du siège (16), cette soupape (13) comportant une jupe cylindrique (22) fermée par une tête (23) pour délimiter avec ce logement (21) une chambre (24), un élément de sollicitation (14) tendant à rapprocher un flanc (26) de la tête (23) de soupape (13) d'une face (29) du siège (16), une lèvre d'étanchéité (31) par laquelle le flanc (26) de la tête (23) et la face (29) du siège (16) sont maintenus à distance lorsque la tête (23) est en appui sur le siège (16) sous l'action de l'élément de sollicitation (14), la tête (23) comportant au moins un trou (33) traversant son flanc (26) pour mettre en communication la chambre (24) avec au moins l'ouverture de refoulement (18, 19), chaque trou (33) débouchant dans un espace annulaire (32) communiquant avec chaque ouverture de refoulement (18, 19), en étant situé en vis-à-vis de la face du siège (16) et en aval de la lèvre (31) par rapport à l'ouverture d'admission (17), cet espace annulaire (32) délimitant avec la lèvre (31) un évasement formant divergeant pour le fluide traversant le clapet (11) afin d'abaisser la pression dans la chambre par effet Venturi lorsque la soupape est ouverte,
**caractérisé en ce que**
le flanc (26) de la tête de soupape (23) et la face (29) du siège (16) portant la lèvre (31) étant en outre coniques.

2. Clapet de pression (11) selon la revendication 1, dans lequel le logement (21) a une forme de trou borgne cylindrique ayant un diamètre interne correspondant au diamètre externe de la jupe (22).

## Patentansprüche

1. Druckventil (11), umfassend einen Körper (12), der mindestens eine Auslassöffnung (18, 19) und mindestens eine Einlassöffnung (17), die mit einem Sitz (16) versehen ist, beinhaltet, wobei ein Fluid imstande ist, von stromaufwärts nach stromabwärts von der Einlassöffnung (17) zu mindestens einer Auslassöffnung (18, 19) ein Ventil (13) zu durchqueren, das in einer Aufnahme (21) dieses Körpers (12) dem Sitz (16) gegenüberliegend gleitet, wobei dieses Ventil (13) eine zylindrische Schürze (22) beinhaltet, die durch einen Kopf (23) verschlossen wird, um mit dieser Aufnahme (21) eine Kammer (24) zu begrenzen, wobei ein Vorspannelement (14) dazu tendiert, eine Flanke (26) des Kopfes (23) eines Ventils (13) einer Seite (29) des Sitzes (16) anzunähern, eine Dichtlippe (31), durch die die Flanke (26) des Kopfes (23) und die Seite (29) des Sitzes (16) auf Abstand gehalten werden, wenn der Kopf (23) unter der Wirkung des Vorspannelements (24) an dem Sitz (16) anliegt, wobei der Kopf (23) mindestens ein Loch (33) beinhaltet, das seine Flanke (26) durchquert, um die Kammer (24) mit der mindestens einen Auslassöffnung (18, 19) in Verbindung zu bringen, wobei jedes Loch (33) in einen Ringraum (32) mündet, der mit jeder Auslassöffnung (18, 19) in Verbindung ist, und sich dabei der Seite des Sitzes (16) gegenüberliegend, und stromabwärts der Lippe (31) in Bezug auf die Einlassöffnung (17) befindet, wobei dieser Ringraum (32) mit der Lippe (31) eine Aufweitung begrenzt, die eine Abweichung für das Fluid bildet, welches das Ventil (11) durchquert, um den Druck in der Kammer durch einen Venturi-Effekt zu senken, wenn das Ventil offen ist,
**dadurch gekennzeichnet, dass** die Flanke (26) des Ventilkopfes (23) und die Seite (29) des Sitzes (16), die die Lippe (31) trägt, darüber hinaus kegelig sind.

2. Druckventil (11) nach Anspruch 1, wobei die Aufnahme (21) eine Form eines zylindrischen Sackloches aufweist, das einen Innendurchmesser aufweist, der dem Außendurchmesser der Schürze (22) entspricht.

## Claims

1. A pressure valve (11) comprising:
a body (12) including at least one discharge opening (18, 19) and at least one intake opening (17) provided with a seat (16), a fluid being able to pass from upstream to downstream from the intake opening (17) to the at least one discharge opening (18, 19), a slide valve (13) sliding in a housing (21) of said body (12) opposite the seat (16), said slide valve (13) including a cylindrical skirt (22) closed by a head (23) to delimit with said housing (21) a chamber (24), a biasing element (14) tending to bring a flank (26) of the head (23) of the slide valve (13) closer to a face (29) of the seat (16), a sealing lip (31) by which the flank (26) of the head (23) and the face (29) of the seat (16) are maintained at a distance when the head (23) is bearing on the seat (16) under the action of the biasing element (14), the head (23) including at least one hole (33) passing through its flank (26) of the head to communicate the chamber (24) with at least the at least one discharge opening (18, 19), each hole (33) opening into an annular space (32) communicating with the at least one discharge opening (18, 19), being located opposite the face of the seat (16) and downstream of the sealing lip (31) relative to the intake opening (17), said annular space (32) delimiting with the sealing lip (31) a widening forming a diverging portion for the fluid passing through the pressure valve (11) in order to reduce the pressure in the chamber by a Venturi effect when the slide valve is open,
**characterized in that** the flank (26) of the head (23) and the face (29) of the seat (16) that carries the sealing lip (31) are conical.

2. The pressure valve (11) according to claim 1, wherein the housing (21) has a shape of a cylindrical blind hole having an internal diameter corresponding to the external diameter of the skirt (22).
